# EUROPÄISCHE PATENTSCHRIFT

(11) **EP 0 938 631 B1**
(45) Veröffentlichungstag und Bekanntmachung des Hinweises auf die Patenterteilung: **30.01.2002**
(21) Anmeldenummer: 97951151.6
(22) Anmeldetag: 08.11.1997
(51) Int. Cl.: F03G 7/06

(54) **KONTRAKTIONSMASCHINE**
CONTRACTION MACHINE
MACHINE DE CONTRACTION

(30) Priorität: 13.11.1996 DE 19646887
(43) Veröffentlichungstag der Anmeldung: 01.09.1999
(73) Patentinhaber: Hasse High Pressure Engineering, 31655 Stadthagen (DE)
(72) Erfinder: HASSE, Hans-Helmut, D-31655 Stadthagen (DE)
(74) Vertreter: König, Norbert, Dipl.-Phys. Dr.
(86) Internationale Anmeldenummer: EP9706210
(87) Internationale Veröffentlichungsnummer: WO9821475

(56) Entgegenhaltungen:
- DE-C- 709 701
- US-A- 3 994 132
- US-A- 4 186 558
- US-A- 4 448 027

## Beschreibung

Die Erfindung betrifft eine Kontraktionsmaschine gemäß Oberbegriff des Anspruchs 1.

Durch die DE-PS 30 26 864 ist ein Verdunstungsmotor bekannt, bei dem die Expansionskraft von Expansionsmaterial bei Zugabe von Flüssigkeit als mechanische Energie genutzt wird. Der bekannte Verdunstungsmotor weist einen Kessel auf, der Expansionselemente, Leitungsanschlüsse und Arbeitsmedium enthält, welches die Expansionselemente umgibt. Über Ventile wird abwechselnd Wasser und Luft den Expansionselementen zugeführt. Das Arbeitsmedium kann über einen Anschluß austreten und wieder eintreten. Im Arbeitstakt strömt Wasser in die Expansionselemente durch die Leitungsanschlüsse und durch das Ventil. Die Expansionselemente expandieren und übertragen Druck und Volumenzuwachs auf das Arbeitsmedium, das durch den Leitungsanschluß und durch das Ventil zur Arbeitsverrichtung geleitet wird. Dieser bekannte Verdunstungsmotor kann zwar die Wärme der Umgebungsluft sowie Abwärme nutzen, der Aufwand zur Trocknung des Expansionsmaterials ist aber relativ hoch.

Durch die DE 28 57 109 ist eine Maschine mit kontraktionsfähigen, ionentrennenden Mitteln bekannt. Die Mittel bestehen aus gefalteten Platten, die an einem Ende hängend fest an einem stationären, steifen Netzwerk angebracht sind und mit dem anderen Ende mit einem beweglichen Netzwerk verbunden sind. Ober die Platten werden abwechselnd eine ionenreiche Flüssigkeit und eine ionenarme Flüssigkeit geleitet, wodurch die Platten abwechselnd kontrahieren und expandieren. Diese abwechselnde Kontraktions- und Expansionskraft wird auf ein mechanisch bewegbares Element übertragen. Die feste Halterung der Platten ist nachteilig; die Platten müssen geführt werden.

Durch die DE-PS 709 701 ist eine Vorrichtung zur Erzeugung mechanischer Energie mit einem umlaufenden Band aus quellfähigem Stoff und durch Verdunstung einer Flüssigkeit bekannt.

Aus der US 41 50 544 sind Vorrichtungen zur Erzeugung mechanischer Energien mit umlaufenden Bändern bekannt, bei denen die eine Bandpartie erhitzt und die andere gleichzeitig gekühlt wird.

Die DE 33 36 406 offenbart Vorrichtungen zum Erzeugen mechanischer Leistung aus Wärme, bei denen eine Flüssigkeit zwischen verformbaren und damit im Volumen veränderbaren Hohlkugeln hin- und hergepumpt wird.

Die US 4 186 558 betrifft eine Maschine zur Umwandlung thermischer Energie in mechanische Energie, indem in einem Zylinder periodisch Flüssigkeit eingefroren und aufgeschmolzen wird.

Die Aufgabe der vorliegenden Erfindung besteht darin, Kontraktionsmaschinen der eingangs genannten Art mit verbessertem, kompakterem Aufbau und höherem Nutzungsgrad anzugeben.

Diese Aufgabe wird durch die Erfindung gemäß Anspruch 1 gelöst. Weitere Lösungen sind in den Ansprüchen 4 und 5 angegeben.

Vorteilhafte und zweckmäßige Weiterbildungen der Erfindung sind in den Unteransprüchen angegeben.

Zum Betrieb der erfindungsgemäßen Kontraktionsmaschinen reicht reine Umweltwärme aus, was ihren Einsatz in trockenen und heißen Klimazonen empfehlenswert macht, weil dort praktisch die Erzeugung kontinuierlicher mechanischer Energie ohne Einsatz nichtsolarer Energie möglich ist.

Durch eine bei der Erfindung vorgesehene Kolben/Zylinder-Anordnung zwischen durch die Arbeitselemente verbundenen Platten wird eine sehr kompakte Bauweise ermöglicht; gleichzeitig wird durch diese Anordnung eine automatische Führung der Platten erreicht.

Die Erfindung soll nachfolgend anhand der beigefügten Zeichnung, in der Ausführungsbeispiele dargestellt sind, näher erläutert werden.

Es zeigt
- Fig. 1: schematisch eine erste Ausführungsform einer Kontraktionsmaschine mit einem Arbeitszylinder,
- Fig. 2: schematisch eine zweite Ausführungsform einer Kontraktionsmaschine mit einem Arbeitszylinder,
- Fig. 2a: ein Teil einer Draufsicht auf bei der Kontraktionsmaschine nach Fig. 2 eingesetzten expansions- und kontraktionsfähigen Platten,
- Fig. 3: schematisch eine perspektivische Darstellung einer dritten Ausführungsform einer Kontrak-tionsmaschine mit mehreren Arbeitszylindern,
- Fig. 4: schematisch eine vierte Ausführungsform einer Kontraktionsmaschine,
- Fig. 5: schematisch eine fünfte Ausführungsform einer Kontraktionsmaschine und
- Fig. 6: schematisch eine sechste Ausführungsform einer Kontraktionsmaschine.

Gleiche Bauteile in den Figuren der Zeichnungen sind mit den gleichen Bezugszeichen versehen.

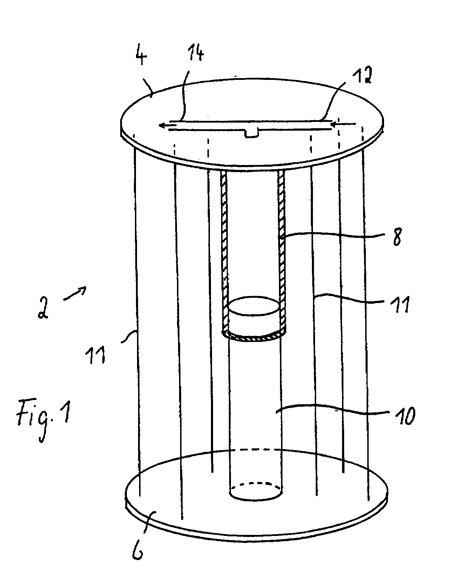

Die Fig. 1 zeigt den prinzipiellen Aufbau einer Kontraktionsmaschine 2. Die Kontraktionsmaschine 2 umfaßt zwei beabstandete, verwindungssteife Platten 4 und 6, welche über eine zentrale Zylinder/Kolben-Anordnung 8, 10 miteinander verbunden sind, wobei entweder die untere oder obere oder beide Platten beweglich angeordnet sind. Zwischen beiden Platten 4, 6 sind außerdem expansions- und kontraktionsfähige Arbeitselemente, beispielsweise Stränge 11, angeordnet.

Im Zylinder 8 befindet sich ein Arbeitsmedium, welches über Zu- und Ablaufanschlüsse 12, 14 zuströmen und abströmen kann. Die Zu- und Ablaufleitungen 12, 14 sind vorzugsweise in die zylinderseitigen Platten 4 integriert.

Die Zylinder/Kolben-Anordnung 8, 10 dient gleichzeitig zur Führung der Platten, so daß auf zusätzliche Führungsmittel verzichtet werden kann.

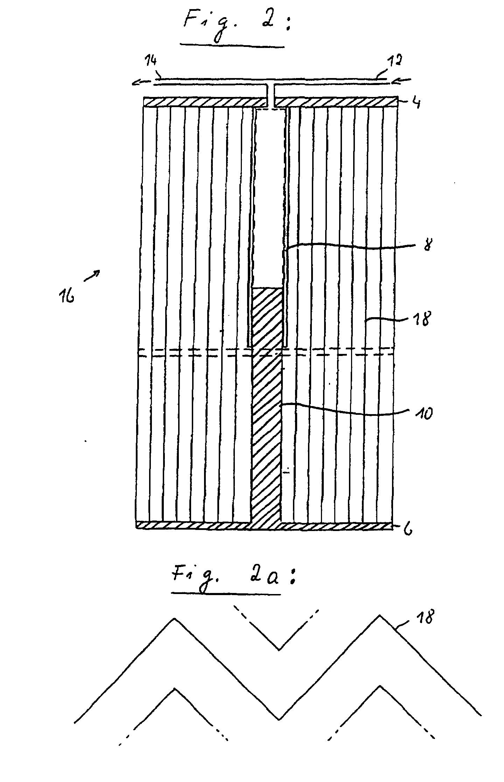

Die Fig. 2 zeigt eine Kontraktionsmaschine 16, die sich von der Kontraktionsmaschine 2 nach Fig. 1 dadurch unterscheidet, daß zwischen den beiden beabstandeten, verwindungssteifen Platten 4 und 6, welche über die Zylinder/Kolben-Anordnung 8, 10 verbunden sind, und von denen eine beweglich ausgebildet ist, nicht expansionsund kontrak-tionsfähige Stränge, sondern expansionsund kontraktionsfähige gefaltete Platten 18 (Fig. 2a) angeordnet sind.

Im Zylinder 8 befindet sich wiederum ein Arbeitsmedium, welches über Zu- und Ablaufanschlüsse 12, 14 zuströmen und abströmen kann. Die Zu- und Ablaufleitungen 12, 14 sind vorzugsweise in die zylinderseitigen Platten 4 integriert. Die Kolben/Zylinder-Anordnung 8, 10 dient gleichzeitig zur Führung der Platten, so daß auf zusätzliche Führungsmittel verzichtet werden kann.

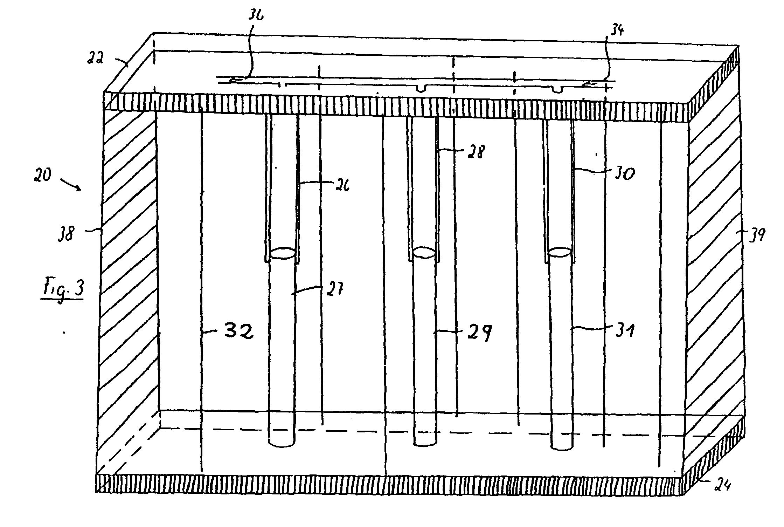

Die Fig. 3 zeigt eine Kontraktionsmaschine 20 mit zwei beabstandeten verwindungssteifen rechteckförmigen Platten 22, 24, zwischen denen mehrere Zylinder/Kolben-Anordnungen 26, 27, 28, 29, 30, 31 und expansions- und kontraktionsfähige Arbeitselemente, beispielsweise Stränge 32 oder auch gefaltete Platten wie bei der Ausführungsform nach Fig. 2, angeordnet sind. Es ist entweder die untere oder obere oder es sind beide Platten beweglich angeordnet.

Der Zu- und Ablauf von Arbeitsmedium (beispielsweise Hydraulikflüssigkeit) erfolgt vorzugsweise über Zu- und Ablaufleitungen 34, 36, die in die zylinderseitigen Platten 22 integriert sind.

Die Platten befinden sich zwischen seitlichen Begrenzungswänden 38, 39.

Die Kontraktionsmaschinen 2, 16 und 20 arbeiten wie folgt: Wenn die Arbeitselemente (Stränge 11 und 32 und die gefalteten Platten 18) abwechselnd zur Expansion mit Flüssigkeit, Feuchtigkeit oder Dampf und zur Kontraktion mit einem Mittel zur Flüssigkeits- oder Feuchtigkeitsabgabe oder Dampfreduzierung beaufschlagt werden, werden die abwechselnd aufeinanderfolgenden Expansions- und Kontraktionsbewegungen über die Platten 4, 6 und 22, 24 auf die Kolben/Zylinder-Anordnung (EN) übertragen, welche bei der Expansionsbewegung durch Vergrößerung des Zylindervolumens einen Saughub durchführt, bei dem Arbeitsmedium über den Zulauf 12, 34 in die Kolben/Zylinder-Anordnung strömt, und bei der Kontraktionsbewegung einen Arbeitshub durchführt, bei dem Arbeitsmedium unter Druck über den Auslaß 14, 36 herausgepreßt wird und zur Verrichtung mechanischer Arbeit nutzbar ist. Die Fig. 1 bis 3 zeigen Kontraktionsmaschinen, bei denen beispielsweise der zur Trocknung der Arbeitselemente herangeführten Luft optimale Durchlässe zugewiesen werden können, wodurch der Aufwand zur Trocknung der Arbeitselemente erheblich gesenkt werden kann.

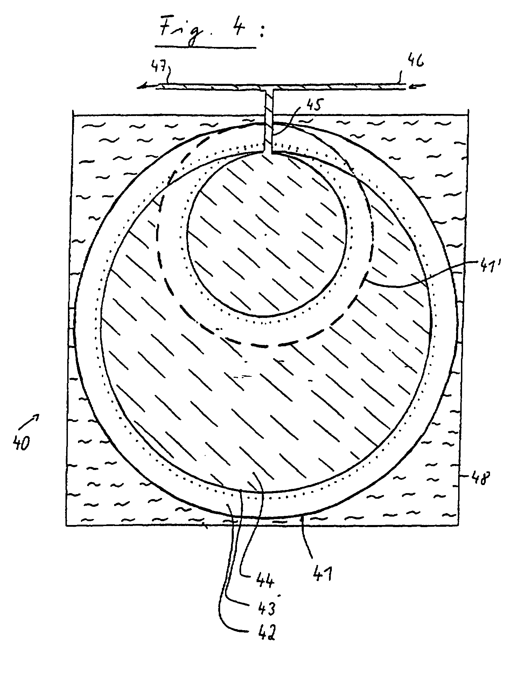

Die Fig. 4 zeigt eine Kontraktionsmaschine 40 mit einer Hohlkugel 41, deren Mantel 42 aus einem expansions- und kontraktionsfähigen Material besteht und innen mit einer dichten, elastischen Hülle 43 aus inaktivem Material ausgekleidet ist und die mit einem Arbeitsmedium 44 gefüllt ist. Das Arbeitsmedium 44 steht über eine durch den Mantel 42 abgedichtet hindurchgeführte Verbindungsleitung 45 mit einer Zu- und Abflußleitung 46, 47 in Verbindung.

Die Hohlkugel 41 aus expansions- und kontraktionsfähigem Material befindet sich in einem Behältnis 48. Diesem Behältnis 48 wird abwechselnd Flüssigkeit oder Dampf zugeführt und Flüssigkeit oder Dampf entnommen, was nicht näher dargestellt ist und auch nicht näher beschrieben werden soll.

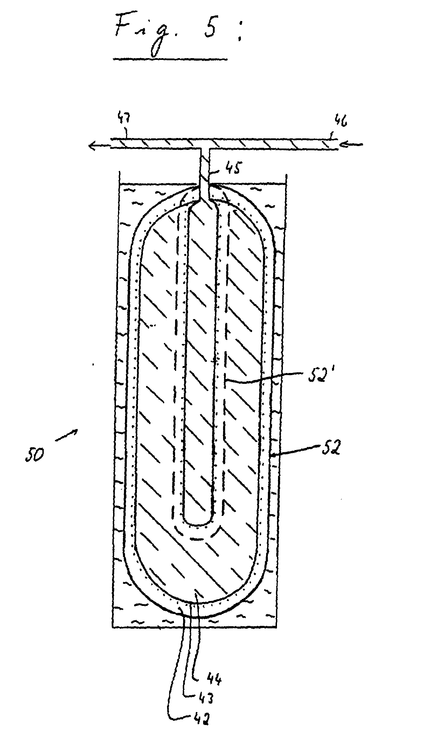

Die Fig. 5 zeigt eine Kontraktionsmaschine 50, die sich von der Kontraktionsmaschine 40 nach Fig. 4 lediglich dadurch unterscheidet, daß anstelle einer Hohlkugel 41 ein hohlzylindrischer Körper 52 aus expansions- und kontraktionsfähigem Material eingesetzt wird. Ansonsten kann auf die Beschreibung der Kontraktionsmaschine 40 nach Fig. 4 verwiesen werden; vergleichbare Bauteile sind mit den gleichen Bezugszeichen wie bei Fig. 4 versehen.

Die Arbeitsweise der Kontraktionsmaschinen 40 und 50 ist wie folgt: Der expandierte Zustand der Hohlkugel 41 bzw. des hohlzylindrischen Körpers 52, in dem die Hohlkugel bzw. der hohlzylindrische Körper Flüssigkeit oder Dampf aufgenommen hat, ist mit durchgezogenen Linien dargestellt. Der kontrahierte bzw. geschrumpfte Zustand der Hohlkugel 41 bzw. des hohlzylindrischen Körpers 52 nach Flüssigkeitsabgabe (Trocknung) oder Dampfreduzierung ist mit den gestrichelten Linien 41' bzw. 52' dargestellt.

Bei der Expansion der Hohlkugel 41 bzw. des Hohlzylinders 52 infolge Flüssigkeits- oder Dampfaufnahme vergrößert sich deren Volumen, wodurch Arbeitsmedium über den Zulauf 46 und die Verbindungsleitung 45 in das Innere der Hohlkugel bzw. des Hohlzylinders einströmt. Beim Kontrahieren der Hohlkugel bzw. des Hohlzylinders infolge Flüssigkeitsabgabe oder Dampfreduzierung verringert sich das Volumen der Hohlkugel bzw. des Hohlzylinders, wodurch das Arbeitsmedium aus der Hohlkugel bzw. dem Hohlzylinder über die Verbindungsleitung 45 und die Abflußleitung 47 herausgedrückt wird und zur Verrichtung mechanischer Arbeit genutzt werden kann.

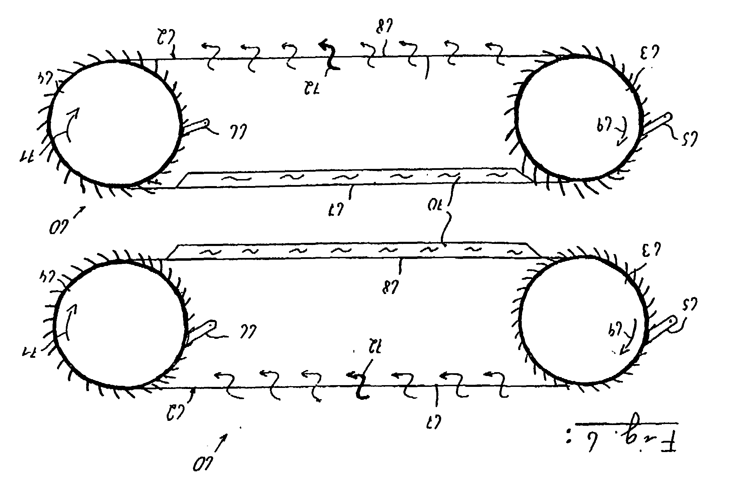

Die Fig. 6 zeigt eine Kontraktionsmaschine 60 mit einem aus expansions- und kontraktionsfähigem Material bestehenden Endlosband 62, welches um zwei drehbar angeordnete Rollen 63, 64 herumgeführt ist, die jeweils durch eine Rücklaufsperre 65, 66 auf den gleichen Drehsinn eingestellt sind. Jede der beiden freien Bandpartien 67, 68 zwischen den Rollen wird abwechselnd befeuchtet (vgl. Bezugszeichen 70) und getrocknet (vgl. Bezugszeichen 72), wobei das Befeuchten der einen Bandpartie 67 oder 68 und das Trocknen der anderen Bandpartie 68 oder 67 jeweils gleichzeitig erfolgt. Diese Ausbildung ermöglicht eine fast kontinuierliche Erzeugung mechanischer Energie. Infolge der Rücklaufsperren werden die Rollen praktisch kontinuierlich in Richtung der Pfeile 69, 71 gleichsinnig gedreht.

## Patentansprüche

1. Kontraktionsmaschine, **gekennzeichnet durch**
- zwei beabstandete starre Elemente (4, 6); (22, 24), die über wenigstens eine Kolben/Zylinder-An-, ordnung (8, 10; 26, 27, 28, 29, 30, 31) für ein Arbeitsmedium miteinander verbunden sind und von denen wenigstens ein Element in Bewegungsrichtung der Kolben/Zylinder-Anordnung bewegbar angeordnet ist,
- wenigstens ein zwischen beiden Elementen angeordnetes und mit beiden Elementen verbundenes Arbeitselement (11, 18, 32), welches mit einer Einrichtung zur Flüssigkeitszufuhr und -abfuhr und/oder Dampfzufuhr und -abfuhr in Wirkverbindung steht und bei Flüssigkeits- und/oder Dampfaufnahme expandiert und bei Flüssigkeitsabgabe und/oder Dampfreduzierung kontrahiert und bei der Kontraktion einen Arbeitshub ausführt, und
- mit den Zylindern (8, 26, 28, 30) verbundenen Zu-und Ablaufleitungen (12, 14; 34, 36) für das Arbeitsmedium.

2. Kontraktionsmaschine nach Anspruch 1, **dadurch gekennzeichnet, daß** die starren Elemente (4, 6, 22, 24) Platten, Geflechte, Gewebe oder Gitter sind.

3. Kontraktionsmaschine nach Anspruch 1, **dadurch gekennzeichnet, daß** das expansions- und kontraktionsfähige Arbeitselement (11, 18, 32) in Form von Strängen, Fäden, gefalteten Platten, Wendeln oder Faserwendeln ausgebildet ist.

4. Kontraktionsmaschine, **gekennzeichnet durch**
eine Hohlkugel (41) oder einen geschlossenen hohlzylindrischen Körper (52), deren Mäntel (42) aus einem expansions- und kontraktionsfähigen Material bestehen und innen mit einer dichten, elastischen Hülle (43) aus inaktivem Material ausgekleidet sind, und die mit einem Arbeitsmedium (44) gefüllt sind, wobei das Arbeitsmedium über eine abgedichtet im Mantel (42) angeordnete Verbindungsleitung (45) mit einer Zu- und Abflußleitung (46, 47) für das Arbeitsmedium in Verbindung steht, und mit einer Einrichtung zur Flüssigkeitszufuhr und
-abfuhr und/oder Dampfzufuhr und -abfuhr in Wirkverbindung stehen und bei Flüssigkeits- und/oder Dampfaufnahme expandieren und bei Flüssigkeitsabgabe und/oder Dampfreduzierung kontrahieren und bei der Kontraktion einen Arbeitshub ausführen.

5. Kontraktionsmaschine mit
einem aus expansions- und kontraktionsfähigem Material bestehendes Endlosband (62), welches um zwei drehbar angeordnete Rollen (63, 64) herumgeführt ist, **dadurch gekennzeichnet daß** die Rollen (63, 64) jeweils durch eine Rücklaufsperre (65, 66) auf den gleichen Drehsinn eingestellt sind, wobei jede der beiden Bandpartien (67, 68) zwischen den Rollen abwechselnd befeuchtet (70) und getrocknet (72) werden, wobei das Befeuchten zum Expandieren der einen Bandpartie (67 oder 68) und das Trocknen zum Kontrahieren der anderen Band-partie (68 oder 67) jeweils gleichzeitig erfolgt und das Kontrahieren der Bandpartie zur Erzeugung mechanischer Energie genutzt wird.

## Claims

1. Contraction machine, **characterised by**
- two rigid elements (4, 6); (22, 24) at a fixed distance from each other, which are connected together via at least one piston/cylinder arrangement (8, 10; 26, 27, 28, 29, 30, 31) for a working medium and of which at least one element is arranged so that it can move in the direction of movement of the piston/cylinder arrangement,
- at least one working element (11, 18, 32), arranged between the two elements and connected to both elements, the said working element being in active connection with a device which supplies and discharges liquid and/or supplies and discharges steam and expanding when it takes up liquid or steam and/or contracting when it discharges liquid and/or if the steam is reduced and which executes a working stroke during contraction, and
- supply and discharge lines (12, 14; 34, 36), connected to the cylinders (8, 26, 28, 30), for the working medium.

2. Contraction machine according to claim 1, **characterised in that** the rigid elements (4, 6, 22, 24) are plates, braided material, woven material or grids.

3. Contraction machine according to claim 1, **characterised in that** the working element (11, 18, 32), which is able to expand and contract, takes the form of strands, threads, folded plates, spirals or fibre spirals.

4. Contraction machine, **characterised by**
a hollow cone (41) or a sealed, hollow, cylindrical body (52), the sheaths (42) of which consist of a material which is able to expand and contract and which are lined with a sealed, elastic sleeve (43) on the inside, made of inactive material, and which are filled with a working medium (44), the working medium being connected via a connection line (45) arranged sealed within the sheath (42) to a supply and discharge line (46, 47) for the working medium, and actively linked to a device which supplies and discharges liquid and/or supplies and discharges steam, expanding if liquid and/or steam is taken up and contracting if liquid is discharged and/or the steam is reduced and executing a working stroke during the contraction.

5. Contraction machine with
an endless band (62) consisting of material able to expand and contract, the band being guided around two rollers (63, 64) arranged so that they can rotate **characterised in that** the rollers (63, 64) are each set to rotate in the same direction by a non-return barrier (65, 66), each of the two parts of the band (67, 68) between the rollers being alternately moistened (70) and dried (72), the moistening causing the one part of the band (67 or 68) to expand and the drying causing the other part of the band (68 or 67) to contract simultaneously in each case and the contraction of the part of the band being used to generate mechanical energy.

## Revendications

1. Machine de contraction **caractérisée par**
- deux éléments rigides (4, 6) ; (22, 24) écartés qui sont reliés l'un à l'autre par au moins un ensemble piston / cylindre (8, 10 ; 26, 27, 28, 29, 30, 31) pour un fluide moteur et parmi lesquels au moins un élément est disposé mobile dans la direction de déplacement de l'ensemble piston / cylindre,
- au moins un élément de travail (11, 18, 32), disposé entre les deux éléments et relié aux deux éléments, qui est en liaison active avec un dispositif pour l'amenée et l'évacuation de fluide et/ou l'amenée et l'évacuation de vapeur et qui se dilate lors de l'absorption de fluide et/ou de vapeur et se contracte lors de la sortie de fluide et/ou de la réduction de vapeur et qui effectue une course de travail lors de la contraction, et
- avec des conduites d'amenée et d'évacuation (12, 14 ; 34, 36) pour le fluide moteur reliées aux cylindres (8, 26, 28, 30).

2. Machine de contraction selon la revendication 1,
**caractérisée en ce que** les éléments rigides (4, 6, 22, 24) sont des plaques, des treillis, des tissus ou des grilles.

3. Machine de contraction selon la revendication 1,
**caractérisée en ce que** l'élément de travail (11, 18, 32) susceptible de dilatation et de contraction est réalisé sous forme de cordes, de fils, de plaques pliées, de spirales ou de spirales de fibres.

4. Machine de contraction,
**caractérisée par** une boule creuse (41) ou un corps (52) cylindrique creux fermé dont les enveloppes (42) sont constituées par un matériau susceptible de dilatation et de contraction et qui sont revêtues intérieurement d'un habillage (43) élastique dense en matériau inactif et qui sont remplies d'un fluide moteur (44), le fluide moteur étant en liaison, par une conduite de liaison (45) disposée de manière étanchée dans l'enveloppe (42), avec une canalisation d'amenée et d'évacuation (46, 47) pour le fluide moteur, et qui sont en liaison active avec un dispositif pour l'amenée et l'évacuation de fluide et/ou l'amenée et l'évacuation de vapeur et qui se dilatent lors de l'absorption de fluide et/ou de vapeur et se contractent lors de la sortie de fluide et/ou de la réduction de vapeur et effectuent une course de travail lors de la contraction.

5. Machine de contraction avec une bande sans fin (62) constituée d'un matériau susceptible de dilatation et de contraction, qui est guidée autour de deux rouleaux (63, 64) disposés rotatifs,
**caractérisée en ce que** les rouleaux (63, 64) sont respectivement réglés au même sens de rotation par un cliquet antiretour (65, 66), chacune des deux parties (67, 68) de bande étant alternativement humidifiée (70) et séchée (72) entre les rouleaux, l'humidification se produisant pour la dilatation de l'une des parties (67 ou 68) de bande et le séchage pour la contraction de l'autre partie (68 ou 67) de bande respectivement simultanément et la contraction de la partie de bande étant utilisée pour la création d'énergie mécanique.
